# EUROPÄISCHE PATENTANMELDUNG

(11) **EP 0 688 646 A2**
(43) Veröffentlichungstag der Anmeldung: **27.12.1995**
(21) Anmeldenummer: 95109466.3
(22) Anmeldetag: 19.06.1995
(51) Int. Cl.: B29B 17/00, B29B 13/10

(54) **Verfahren zur Herstellung eines Formteils**

(30) Priorität: 23.06.1994 US 264553
(71) Anmelder: Eduard Küsters Maschinenfabrik GmbH & Co. KG, D-47805 Krefeld (DE)
(72) Erfinder: Funger, Bernhard, D-47839 Krefeld (DE); Grüber, Heinz, D-47918 Tönisvorst (DE)
(74) Vertreter: Palgen, Peter, Dr. Dipl.-Phys.

(57) **Zusammenfassung**

Teppichmaterial (10) mit mindestens einem Anteil an ungereinigtem Altteppich wird zu einem faserartigen Gewölle zerkleinert. Das Teppichmaterial enthält ein niedrigschmelzendes thermoplastisches Bindemittel, z.B. Polypropylen, welches aus dem Altteppich stammen oder zugesetzt sein kann. Dem Teppichmaterial wird ferner ein duroplastisch aushärtendes Bindemittel, z.B. Phenolharz zugesetzt. Mit diesen beiden Bindemitteln wird das Teppichmaterial bei einer über dem Erweichungspunkt des thermoplastischen Bindemittels, jedoch unter dem Erweichungspunkt etwaiger sonstiger thermoplastischer Anteile des Teppichmaterials liegenden Temperatur zu dem Formteil bzw. der Platte verpreßt.

## Beschreibung

Ein Problem wachsender Bedeutung stellt die Entsorgung von sogenannten Altteppichen dar, das heißt von Teppichmaterial, welches in Wohnungen oder Objekten manche Jahre als Auslegeware gelegen hat und nun aus Gründen der Abnutzung oder der Renovierung entfernt und durch neue Ware ersetzt wird. Die Altteppiche fallen in einer erheblichen Menge an, die einen bedeutenden Anteil der Teppichproduktion ausmacht. Bisher war es üblich, Altteppiche, die in der Bundesrepublik als Sondermüll gelten, zu verbrennen oder zu deponieren, wobei einschneidende behördliche Auflagen zu beachten sind.

Es sind aber bereits Tendenzen bemerkbar, die Entsorgungslast auf die Teppichhersteller zu verlagern und sie zu verpflichten, Altteppiche in einer bestimmten Proportion zur Produktion zurückzunehmen. Die Verantwortung für das Altmaterial landet auf diese Weise wieder beim Hersteller.

Besondere Schwierigkeiten bei Überlegungen zur Wiedernutzung des textilen Fasermaterials in den Altteppichen liegen einerseits in der fehlenden Sortenreinheit und andererseits in der Belastung des textilen Material mit Fremdstoffen.

Die fehlende Sortenreinheit ist in zwei Hinsichten gegeben. Sie kann beim einzelnen Teppich vorhanden sein, der z.B. einen Pol aus Polyamid oder Polyester und einen Rücken aus Polypropylen oder dergleichen aufweisen kann. Sie liegt aber auch in der zur Wiederverwertung anfallenden Gesamtmenge der Altteppiche vor, insofern die Herkunft und die Zusammensetzung des einzelnen Teppichstücks meist nicht bekannt ist und sich eine diesbezügliche Untersuchung einzelner Teppichstücke aus Kostengründen verbietet. Die Sortenvermischung hat überdies noch einen besonderen Aspekt, insofern außer thermoplastischen oder duroplastischen Kunststoffasern auch tierische oder pflanzliche Fasern wie Wolle oder Baumwolle zugegen sein können. Es muß also in einer Menge an Altteppichstücken hinsichtlich der Fasern praktisch mit allem gerechnet werden.

Im Hinblick auf die Fremdstoffe haben Untersuchungen gezeigt, daß die Belastung der Altteppiche bis zu 30 Gewichtsprozent betragen kann. Es handelt sich dabei um Schmutz, der im Laufe der Zeit in Gestalt von Staub oder in den Teppich hineingetretenen organischen oder mineralischen Partikeln in den Teppich hineingelangt ist und um Reste des Rückens, das heißt des Schaummaterials und der Füllstoffe sowie anhaftende Kleberreste.

Bemühungen zur Wiedergewinnung der textilen Anteile in reiner Form, die mit einer Reinigung der Altteppiche und einer Isolierung der Fremdstoffe einhergehen, sehen sich vor einem Anteil von bis zu 300 kg dieser Fremdstoffe pro Tonne Altteppich, die nach der aufwendigen Reinigung und Sortierung des Altteppichmaterials irgendwie dauerhaft unschädlich gemacht werden müssen.

Es hat nicht an Versuchen gefehlt, Teppichmaterial einer erneuten sinnvollen Nutzung zuzuführen, z.B. indem eine Streuung des zerkleinerten Materials zu Platten verpreßt worden ist. Gemeinsam ist diesen Versuchen, daß sie auf die Verwendung von Produktions- und Konfektionierungsabfällen gerichtet sind, das heißt sich mit unbenutztem Material gleichbleibender, wenn auch möglicherweise nicht sortenreiner Zusammensetzung befaßten. Das Problem, daß die bis zu 30 Gewichtsprozent der Gesamtmenge ausmachenden Fremdstoffe die Bindung der Platten und deren mechanische Eigenschaften beeinflussen, lag bei dem geschilderten Versuchen nicht vor und ist dementsprechend auch nicht in Angriff genommen worden.

Dies ist vielmehr erst in der DE 41 37 744 A1 geschehen, bei der auch Altteppiche verarbeitet und beim Pressen einer Platte thermoplastische Teppichanteile besonders in oberflächennahen Bereichen aufgeschmolzen wurden, um hier eine Art Tragschicht eines Schichtwerkstoffs zu bilden. Das zur Herstellung der Platten dienende Ausgangsmaterial aus zerkleinerten Teppichresten hat eine für eine Streuung nicht unproblematische Struktur. Es besteht aus den Textilfaser, die nach intensiver Zerkleinerung ein faserartiges "Gewölle" bilden, und den in dem Alltteppich vorhandenen Fremdstoffen, die einen bestimmten Anteil an mineralischen Schmutzstoffen enthalten, die die Tendenz haben, durch das Gewölle hindurchzufallen. Es hat sich denn auch gezeigt, daß die nach der DE 41 37 744 A1 hergestellten Platten häufig eine Einseitigkeit aufweisen, d.h. die Zusammensetzung des zur Herstellung des Formteils gestreute Mischung an der Oberseite und der Unterseite verschieden ist, d.h. beim Streuen eine teilweise Entmischung entsteht. Diese Erscheinung ist auf die unterschiedliche Struktur der Bestandteile zurückzuführen, die einmal fasrig oder gewölleartig ist, soweit die zerkleinerten Teppichreste betroffen sind, die aber kompakt mineralisch, sandartig ist, soweit es in dem Altteppich festgehaltene Schmutzbestandteile angeht. Letztere haben beim Streuen die Neigung, durch das Gewirr der faserartigen Bestandteile hindurchzufallen und sich bevorzugt unten anzusammeln, was nach dem Pressen der Mischung als Einseitigkeit des gebildeten Formteils auffällt.

Von diesem Problem ausgehend liegt der Erfindung die Aufgabe zugrunde, ein Verfahren zur Herstellung von Formteilen durch Pressen einer gestreuten Schicht einer Mischung aus kleinteiligen Bestandteilen unterschiedlicher Struktur so auszugestalten, daß eine Einseitigkeit des aus der gestreuten Mischung gepreßten Formteils vermieden ist.

Diese Aufgabe wird durch die Erfindung nach Anspruch 1 gelöst.

Überraschenderweise hat sich gezeigt, daß ein solcher Zusatz von Wachs oder Stearin eine wesentliche Verminderung der Entmischung der in Bezug auf das Streuen eine unterschiedliche Struktur aufweisenden Bestandteile einer Streumischung insbesondere der Fremdstoffanteile und der Faseranteile eines zu verpressenden Teppichmaterials mit Anteilen von Altteppich mit sich bringt, so daß die unerwünschte Einseitigkeit der hergestellten Formteile bzw. Platten fast ganz unterdrückt werden kann.

Der Zusatz von Paraffin zu Holzspänen ist bei der Herstellung von Holzspanplatten an sich bekannt, allerdings nur, um die fertigen Holzspanplatten wasserabweisend zu machen, wie sich aus dem Buch von Deppe und Ernst "Taschenbuch der Spanplattentechnik" 3. Aufl. (1991) DRW-Verlag Leinfelden-Echterdingen, S. 68 ergibt.

Wichtig ist die gleichmäßige Verteilung des Wachses oder Stearins über die Bestandteile der Mischung. Hierzu verhilft die Aufbringung in flüssiger oder in einer Flüssigkeit gelöster oder suspendierter Form nach Anspruch 2. Auf diese Weise ist die Verteilung relativ geringer Mengen erleichtert.

Die Aufbringung kann nach verschiedenen hierfür bekannten Methoden gemäß Anspruch 3 erfolgen.

Besonders wirksam ist das Verfahren an dem fein zerkleinerten Teppichmaterial mit Altteppich nach Anspruch 4.

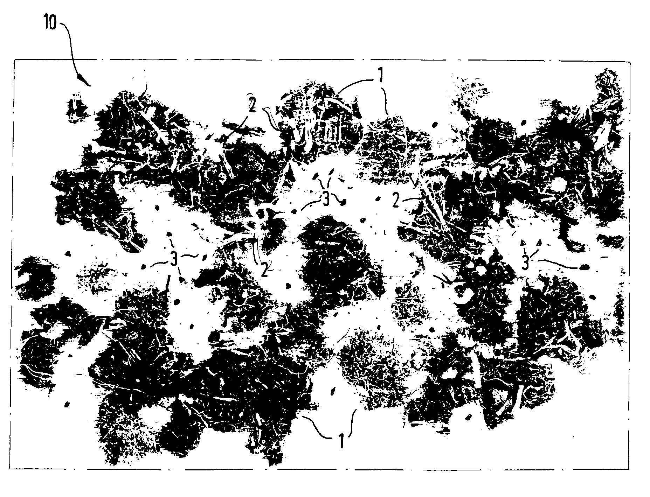

Anhand der Zeichnung wird die Erfindung näher erläutert. Sie zeigt eine Ansicht eines zu verpressenden Teppichmaterials in etwa 1-5-facher Vergrößerung.

Das in der Zeichnung wiedergegebene Teppichmaterial 10 besteht aus Altteppich, der in einer Hackmaschine in etwa handtellergroße Stücke zerhackt und anschließend in einer Mühle fein zermahlen worden ist, wobei keinerlei Reinigung stattgefunden hat und die bis zu 30 % des Gewichts betragende Belastung mit Fremdstoffen, insbesondere partikelförmige Anteile 3 wie Schmutz, Sand und andere mineralischen Stoffe in dem Material verbleibt.

Die Zerkleinerung durch das Mahlen geht so weit, daß die Teppichstruktur vollkommen verloren geht und nur noch ein fasriges Gewölle übrigbleibt, welches sich beim Durchgang durch das Ausgangssieb der Mühle zu kleinen lockeren Bäuschen 1 agglomeriert. In dem gezeigten Ausführungsbeispiel hatte der Teppich einen Polyamid-Flor und einen Bändchenrücken aus Polypropylen. Die Rückenpartikel 2 sind noch als unterschiedliches Material erkennbar. Die thermoplastischen Anteile machen etwa 5 bis 30 Gewichtsprozent, in dem Ausführungsbeispiel etwa 20 Gewichtsprozent des gemahlenen Altteppichs aus. Sie dienen beim anschließenden Verpressen einer gestreuten Matte des Teppichmaterials als thermoplastisches Bindemittel in dem entstehenden Formteil.

Die kleinen relativ schweren partikelförmigen Anteile und das fasrige Gewölle des zerkleinerten Teppichmaterials besitzen eine für das Streuen gänzlich unterschiedliche Struktur, d.h. die Partikel 3 haben die Tendenz, durch die Teppichfasern hindurchzufallen und sich auf der Preßunterlage anzusammeln. Um diese Entmischung zu verhindern, wird auf das Teppichmaterial 10 vor dem Streuen eine Menge von 0,5 bis 2,0 Gewichtsprozent des Teppichmaterials an Wachs, z.B. Paraffin, in flüssiger oder in in einer Flüssigkeit gelöster oder suspendierter Form aufgesprüht, so daß das Material mit einem dünnen Überzug versehen ist. Hierdurch wird die Entmischung verhindert.

## Patentansprüche

1. Verfahren zur Herstellung eines Formteils durch Pressen einer gestreuten Schicht einer Mischung aus kleinteiligen Bestandteilen unterschiedlicher Struktur, dadurch gekennzeichnet, daß die Mischung vor dem Streuen mit einem gleichmäßig verteilten Zusatz von Wachs oder Stearin in einer Menge von 0,5 bis 2 Gewichtsprozent der Mischung versehen wird.

2. Verfahren nach Anspruch 1, dadurch gekennzeichnet, daß die Mischung mit dem Wachs oder Stearin in flüssiger oder in einer Flüssigkeit gelöster oder suspendierter Form versehen wird.

3. Verfahren nach Anspruch 2, dadurch gekennzeichnet, daß die Flüssigkeit aufgesprüht oder als Nebel mit der Mischung in Berührung gebracht wird.

4. Verfahren nach einem der Ansprüche 1 bis 3, dadurch gekennzeichnet, daß als gestreute Schicht ein Teppichmaterial mit mindestens einem Anteil an Altteppich verwendet wird, das ungereinigt zu einem überwiegend fasrigen Gewölle zerkleinert worden ist.
